# EUROPÄISCHE PATENTANMELDUNG

(11) **EP 1 126 301 A2**
(43) Veröffentlichungstag der Anmeldung: **22.08.2001**
(21) Anmeldenummer: 01102379.3
(22) Anmeldetag: 02.02.2001
(51) Int. Cl.: G02B 23/24

(54) **Endoskopobjektiv**

(30) Priorität: 04.02.2000 DE 10005132
(71) Anmelder: Schindler, Siegfried, 79261 Gutach-Bleibach (DE)
(72) Erfinder: Schindler, Siegfried, 79261 Gutach-Bleibach (DE)
(74) Vertreter: Goy, Wolfgang, Dipl.-Phys.

(57) **Zusammenfassung**

Ein Endoskopobjektiv weist eine Linsengruppe 1 auf, welche an der distalen Seite eine Negativlinse 2 besitzt. Diese Negativlinse 2 schließt mit der restlichen Linsengruppe 1 einen hermetisch abgeschlossenen Hohlraum 3 ein, welcher mit einem festen oder flüssigen, durchsichtigen Füllmaterial ausgefüllt ist. Dabei besitzt die Negativlinse 2 einen hohen Brechungsindex und das Füllmaterial einen niedrigen Brechungsindex, wobei die Differenz der Brechungsindizes vorzugsweise größer als 0,23, insbesondere größer als 0,35 ist.

## Beschreibung

Die Erfindung betrifft ein Endoskopobjektiv nach dem Oberbegriff des Anspruchs 1.

Endoskope sowohl für medizinische als auch für technische Zwecke weisen ein distal angeordnetes Objektiv auf. Diese Endoskopobjektive besitzen ein Linsensystem, welches in einem umgebenden Außenrohr angeordnet und durch Kleben flüssigkeitsdicht sowie gasdicht fixiert ist. Das vordere Endfenster des Objektivs wird durch eine Negativlinse gebildet. Diese ist bezüglich ihrer Stirnseite plan, da sich das Endoskopobjektiv bei einem in der Medizin eingesetzten Endoskop in Körperflüssigkeit befindet.

Zwischen dieser vorderen negativen Zerstreuungslinse und der restlichen Linsengruppe dahinter befindet sich ein hermetisch abgeschlossener Hohlraum, welcher mit Luft gefüllt ist. Der Nachteil dieses Hohlraumes liegt im Einschluß von feuchter Luft und/oder von Kleberdämpfen. Diese dehnen sich beim Autoklavieren aus und bleiben beim Abkühlen als Beschlag auf der Glasfläche innerhalb des Hohlraumes zurück. Durch diesen Niederschlag entsteht ein nicht unerheblicher Ausschuß mit entsprechend hohen Fehlerkosten. Ein weiterer Nachteil besteht darin, daß im Laufe der Zeit ein Beschlagen der Linsen auftreten kann und sich somit die gewünschte Bildqualität allmählich verschlechtert.

Davon ausgehend liegt der Erfindung die **Aufgabe** zugrunde, das Endoskopobjektiv der eingangs angegebenen Art derart weiterzuentwickeln, daß das Beschlagen innerhalb des Hohlraums der Negativlinse vermieden wird.

Die technische **Lösung** ist gekennzeichnet durch die Merkmale im Kennzeichen des Anspruchs 1.

Die Grundidee des erfindungsgemäßen Endoskopobjektivs besteht darin, den hermetisch abgeschlossenen Gasraum in der Negativlinse dadurch zu vermeiden, daß der Hohlraum mit einem Material ausgefüllt ist, so daß das den Niederschlag verursachende Gas verdrängt ist. Für das so ausgebildete Endoskopobjektiv kann jede herkömmliche Negativlinse verwendet werden. Es muß lediglich ein dazu passendes Füllmaterial vorgesehen sein. Dieses Füllmaterial kann in fester oder auch in flüssiger Form vorliegen. Der Vorteil im Vermeiden des Niederschlags beim Autoklavieren besteht darin, daß der Ausschuß auf ein Minimum reduziert ist und somit nur geringe Fehlerkosten entstehen. Ein weiterer Vorteil besteht darin, daß ein über einen längeren Zeitraum auftretendes Beschlagen der Linsen verhindert wird und somit die gewünschte Bildqualität dauerhaft erhalten bleibt.

Vorzugsweise kann es sich gemäß der Weiterbildung in Anspruch 2 bei dem Füllmaterial um Glas, beispielsweise Quarzglas handeln. Der Vorteil von Glas als Füllmaterial für den Hohlraum besteht darin, daß beim Autoklavierprozeß der Optik keine thermischen Verformungen auftreten. Selbstverständlich sind auch andere Füllmaterialien denkbar, beispielsweise ein Immersionsmittel, insbesondere ein Immersionsöl oder ein Immersionsgel.

Zur technischen Realisierung schlägt die Weiterbildung gemäß Anspruch 3 vor, daß die Negativlinse aus einem hochbrechenden Material und das Füllmaterial aus einem sehr niedrigbrechenden Material besteht. Wie zuvor bereits erwähnt, ist es nicht notwendig, eine spezielle Negativlinse zu verwenden. Vielmehr kann für das Objektiv mit der Hohlraumausfüllung jede herkömmliche Negativlinse verwendet werden.

Vorzugsweise ist gemäß Anspruch 4 der Brechungsindex der Negativlinse größer als 1,75 und gemäß Anspruch 5 der Brechungsindex des Füllmaterials kleiner als 1,52. Gemäß Anspruch 6 ist die Differenz der Brechungsindizes zwischen der Negativlinse und dem Füllmaterial größer als 0,23 (wobei man dann schon an der technischen Grenze angelangt ist), insbesondere größer als 0,35, was in der Praxis realistisch ist und technisch ohne weiteres umgesetzt werden kann.

Die Weiterbildung gemäß Anspruch 7 schließlich hat den Vorteil, daß durch die Schwärzung der Planfläche mit der freien mittigen Öffnung hinter dem Hohlraum störendes Streulicht eliminiert und dadurch der Kontrast gesteigert wird. Die Schwärzung kann dabei entweder auf der Negativlinse oder auf dem dahinter befindlichen Linsenelement aufgebracht sein.

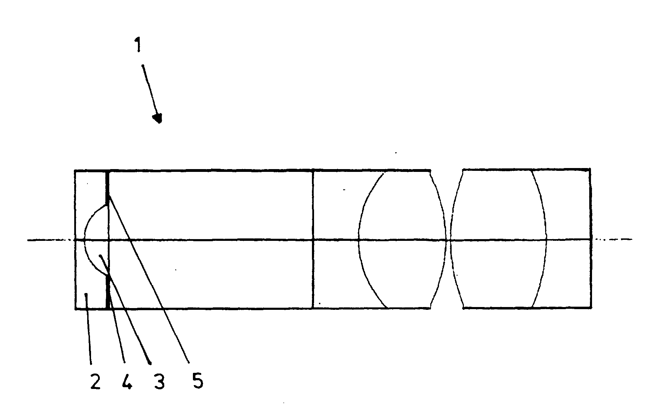

Ein Ausführungsbeispiel eines erfindungsgemäßen Endoskopobjektivs wird nachfolgend anhand der Zeichnung beschrieben. Diese Zeichnung zeigt einen rein schematischen Schnitt durch ein derartiges Endoskopobjektiv.

Das Endoskopobjektiv weist eine Linsengruppe 1 aus mehreren Linsen auf. Die Ablenkung des Objektivs besteht im vorliegenden Ausführungsbeispiel 0°. Selbstverständlich können die Ablenkungen auch einen Winkel > 0° aufweisen.

Die Linsen der Linsengruppe 1 bilden eine gas- sowie flüssigkeitsdichte Einheit und sind zu diesem Zweck verklebt. Die vorderste Linse der Linsengruppe 1 wird durch eine Negativlinse 2 mit ebener Stirnseite gebildet. An diese Negativlinse 2 schließt sich die restliche Linsengruppe 1 an. Der dazwischen befindliche, hermetisch abgeschlossene Hohlraum 3 ist mit einem Füllmaterial ausgefüllt, bei dem es sich um eine feste oder flüssige Substanz handelt, beispielsweise Glas. Außerdem ist das Füllmaterial durchsichtig und entspricht somit für den Lichtdurchtritt den ansonsten für Linsen üblichen Lichttransmissionseigenschaften. Das Grundprinzip besteht dabei darin, daß die Negativlinse 2 einen hohen Brechungsindex aufweist, während das Füllmaterial für den Hohlraum 3 einen sehr niedrigen Brechungsindexbesitzt. Die Differenz der Brechungsindizes zwischen der Negativlinse 2 und dem Füllmaterial für den Hohlraum 3 ist größer als 0,23, insbesondere für praktische Zwecke größer als 0,35.

Der Vorteil dieses Endoskopobjektivs besteht darin, daß durch das Ausfüllen des Hohlraums 3 mit einem nicht gasförmigen Material kein hermetisch abgeschlossener Luftraum entsteht, so daß beim Autoklavieren kein Beschlag innerhalb der Negativlinse auftreten kann und somit der Ausschuß auf ein Minimum reduziert ist. Ein weiterer Vorteil besteht darin, daß ein über einen längeren Zeitraum auftretendes Beschlagen der Linsen verhindert wird und somit die gewünschte Bildqualität dauerhaft erhalten bleibt.

Zwischen der Negativlinse 2 und dem dahinter befindlichen Glaszylinder ist um den Hohlraum 3 herum eine plane Ringfläche 4 definiert. Diese weist eine reflexmindernde Schicht 5, insbesondere eine Schwärzung auf. Diese kann entweder auf der Negativlinse 2 oder auf dem Glaszylinder aufgebracht sein. Beide Elemente sind in herkömmlicher Weise miteinander verkittet. Bei der schwarzen Beschichtung kann es sich um eine Mikrochromschicht im Nanometerbereich handeln, welche sich mit dem Glas verbindet. Der Vorteil der Schwärzung besteht darin, daß störendes Streulicht eliminiert und der Kontrast gesteigert wird.

Das Prinzip des erfindungsgemäßen Objektivs ist nicht auf die Anwendung bei Endoskopobjektiven beschränkt, sondern es ist durchaus denkbar, daß das Erfindungsprinzip auch bei anderen Objektiven einsetzbar ist, nämlich immer dort, wo die Linsengruppe einen hermetisch abgeschlossenen Hohlraum aufweist.

### Bezugszeichenliste

- 1: Linsengruppe
- 2: Negativlinse
- 3: Hohlraum
- 4: Ringfläche
- 5: reflexmindernde Schicht

## Patentansprüche

1. Endoskopobjektiv
mit einer Linsengruppe (1), welche an der distalen Seite eine Negativlinse (2) aufweist, die mit der restlichen Linsengruppe (1) einen hermetisch abgeschlossenen Hohlraum (3) einschließt,
**dadurch gekennzeichnet**,
daß der Hohlraum (3) mit einem festen oder flüssigen, durchsichtigen Füllmaterial ausgefüllt ist.

2. Endoskopobjektiv nach dem vorhergehenden Anspruch,
dadurch gekennzeichnet,
daß das Füllmaterial Glas oder ein Immersionsmittel, insbesondere ein Immersionsöl oder ein Immersionsgel ist.

3. Endoskopobjektiv nach einem der vorhergehenden Ansprüche,
dadurch gekennzeichnet,
daß die Negativlinse (2) einen hohen Brechungsindex und das Füllmaterial einen niedrigen Brechungsindex aufweist.

4. Endoskopobjektiv nach einem der vorhergehenden Ansprüche,
dadurch gekennzeichnet,
daß der Brechungsindex der Negativlinse (2) größer als 1,75 ist.

5. Endoskopobjektiv nach einem der vorhergehenden Ansprüche,
dadurch gekennzeichnet,
daß der Brechungsindex des Füllmaterials kleiner als 1,52 ist.

6. Endoskopobjektiv nach einem der vorhergehenden Ansprüche,
dadurch gekennzeichnet,
daß die Differenz der Brechungsindizes zwischen der Negativlinse und dem Füllmaterial größer als 0,23, insbesondere größer als 0,35 ist.

7. Endoskopobjektiv nach einem der vorhergehenden Ansprüche,
dadurch gekennzeichnet,
daß die Ringfläche (4) um den Hohlraum (3) herum zwischen der Negativlinse (2) und der restlichen, dahinter befindlichen Linsengruppe (1) eine reflexmindernde Schicht (5), insbesondere eine Schwärzung aufweist.
